# EUROPÄISCHE PATENTSCHRIFT

(11) **EP 1 704 195 B1**
(45) Veröffentlichungstag und Bekanntmachung des Hinweises auf die Patenterteilung: **11.11.2009**
(21) Anmeldenummer: 04816327.3
(22) Anmeldetag: 16.11.2004
(51) Int. Cl.: C09J 7/02, C09J 133/00, C09J 175/00

(54) **HAFTKLEBEMASSE**
ADHESIVE MATERIAL
MASSE AUTO-ADHESIVE

(30) Priorität: 05.12.2003 DE 10357323
(43) Veröffentlichungstag der Anmeldung: 27.09.2006
(73) Patentinhaber: TESA SE, 20253 Hamburg (DE)
(72) Erfinder: HUSEMANN, Marc, 22605 Hamburg (DE); ZÖLLNER, Stephan, 22043 Hamburg (DE)
(74) Vertreter: Heins, Matthias
(86) Internationale Anmeldenummer: PCT/EP2004/052971
(87) Internationale Veröffentlichungsnummer: WO 2005/054389

(56) Entgegenhaltungen:
- US-A- 4 339 485
- US-A- 5 660 922

## Beschreibung

Die Erfindung betrifft eine Haftklebemasse, Verfahren zu deren Herstellung sowie eine Verwendung einer derartigen Haftklebemasse.

Für industrielle Haftklebeband-Anwendungen werden sehr häufig doppelseitige Haftklebebänder eingesetzt, um zwei Materialien miteinander zu verkleben. Die Anforderungen sind für die unterschiedlichsten Einsatrrichtungen z. T. sehr spezifisch, so daß hohe Anforderungen an die entsprechenden Klebebänder gestellt werden. Im Automobilbereich werden z. B. sehr häufig eine hohe Temperaturstabilität sowie eine hohe Beständigkeit gegen Lösemittel und Kraftstoffe gefordert. Diese Eigenschaften werden in sehr guter Form durch vernetzte Acrylathaftklebemassen erfüllt.

Weiterhin können ebenfalls im Industriebereich die unterschiedlichsten Untergründe verklebt werden. Hier kann es z. T. von Vorteil sein, Hitze-aktivierbare Klebemassen einzusetzen, die ab einer bestimmten Temperatur erweichen, sehr gut auf die Substrate auffließen und dann beim Abkühlen einen festen Verbund ergeben.

Beidseitige Haftklebebänder, die solche unterschiedlichen Anforderungen erfüllen, sind bereits seit langem bekannt.

In US 5,593,759 wird ein doppelseitiges Haftklebeband beschrieben, welches sich aus einer Trägerschicht zusammensetzt, die mit zwei dünnen Haftklebemassen beschichtet ist. Die Trägerschicht besteht aus einer Strukturklebemasse. Bei thermischer Aktivierung tritt eine Verblendung der Haftklebemasse mit dem Strukturhaftkleber auf und härtet diesen ebenfalls aus. Auf diesem Weg sind sehr feste Verbindungen zwischen zwei Fügeteilen möglich. Dennoch weist dieses Haftklebeband einen für viele Anwendungen elementaren Nachteil auf, da das doppelseitige Haftklebeband bereits zu Beginn auf beiden Seiten anfaßklebrig ist. Es existiert eine Vielzahl von Anwendungen, bei denen es von Vorteil ist, wenn das Haftklebeband zumindest auf einer Seite nicht klebrig und somit optimal repositionierbar ist. In US 5.593,759 ist dieser Vorteil nicht gegeben.

In US 4,248,748 werden Hitze-aktivierbare Polyacrylathaftklebemassen mit Harzzusätzen beschrieben Durch die Harzzusätze wird die Glasübergangstemperatur der Polyacrylathaftklebemasse und somit der Tack bei Raumtemperatur hochgesetzt. Die hitzeaktivierbaren Haftklebemassen werden aber nur für einseitige Haftklebebänder (Folien-Verklebung etc.) eingesetzt. Es werden somit keine hohen Anforderungen an die Verklebung von Fügeteilen oder an die Verankerung von Hitze aktivierbaren Haftklebemassen an die Folie gestellt.

In US 4,199,646 werden Hitze-aktivierbare Haftklebebänder beschrieben, wobei die Hitze-aktivierbare Haftklebemasse einen Elastizitätsmodulus von 10 bis 300 kg/cm² aufweist. Der Modulus liegt somit bei der Aktivierungstemperatur auf dem Level von Haftklebemassen bei Raumtemperatur. Auch in diesem Patent werden - in Analogie zu US 4,248,748 - die Klebkraft und die Elastizität über die Zusammensetzung der Haftklebemasse gesteuert. Weiterhin werden nur doppelseitige Hitze-aktivierbare Haftklebebänder beschrieben, die nur beidseitig durch Hitze aktiviert werden können.

Die Vielzahl der beschriebenen Haftklebebänder verdeutlicht, dass ein großer Bedarf an derartigen Haftklebebändern besteht. Es ist jedoch wünschenswert, den Aufbau derartiger Haftklebebänder weiter zu vereinfachen.

Die US 4,339,485 A beschreibt einen Acrylathaftklebemassen-Polyolefinreleaseschichten-Verbund. Hier ist eine der Schichten immer derart ausgestaltet, dass sie eine Releasewirkung besitzt (Releaseschicht). Die Schrift geht nicht auf Schichten ein, die unter Temperatureinwirkung und optionalem Druck haftklebrig werden und nach der Verklebung und Abkühlen durch die Verfestigung eine hohe Klebkraft aufbauen.

Der Erfindung liegt daher die Aufgabe zugrunde, eine Haftklebemasse anzugeben, die eine klebende und eine nicht-klebende Seite aufweist. Darüber hinaus sollen ein Verfahren zur Herstellung einer solchen Haftklebemasse sowie eine Verwendung einer derartigen Haftklebemasse angegeben werden.

Diese Aufgabe wird durch die Merkmale der Ansprüche 1, 2 und 6 gelöst. Zweckmäßige Ausgestaltungen der Erfindungen ergeben sich aus den Merkmalen der Ansprüche 3 bis 5.

Nach Maßgabe der Erfindung ist eine Haftklebemasse vorgesehen, die eine erste Schicht und eine zweite Schicht umfasst, wobei
die erste Schicht eine Hitze-aktivierbare Haftklebemasse ist, die eine statische Glasübergangstemperatur T_{G,A} oder einen Schmelzpunkt T_{S,A} von mindestens +30 °C aufweist; und
die zweite Schicht eine Polyacrylathaftklebemasse ist, die eine statische Glasübergangstemperatur von höchstens +15 °C aufweist,
wobei die Hitze-aktivierbare Haftklebemasse der ersten Schicht
aus einer Gruppe ausgewählt ist, die
- Polyester,
- Copolyester,
- Polyamide,
- Copolyamide,
- einen Kautschuk oder einen Synthesekautschuk und zumindest ein Reaktivharz umfasst.

Überraschenderweise wurde gefunden, dass die erfindungsgemäße Haftklebemasse in hervorragender Weise die oben genannten Anforderungen erfüllen. Die erfindungsgemäße Haftklebemasse ist auf einer Seite Hitze-aktivierbar, d. h. bei Raumtemperatur nicht-klebend, und auf der anderen Seite bereits bei Raumtemperatur haftklebrig.

Die erfindungsgemäße Haftklebemasse ist vorzugsweise eine zweischichtige Haftklebemasse.

Im Folgenden werden die erste Schicht als Schicht A und die zweite Schicht als Schicht B bezeichnet.

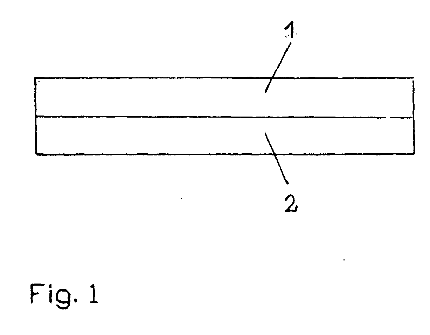

Fig. 1 zeigt in schematischer Darstellung eine erfindungsgemäße, zweischichtige Haftklebemasse, wobei Bezugszeichen 1 die erste Schicht (Schicht (A)) und Bezugszeichen 2 die zweite Schicht (Schicht (B)) kennzeichnet.

In einer bevorzugten Ausführungsform der erfindungsgemäßen Haftklebemasse sind Schicht A und Schicht B durch physikalische oder chemische Vorbehandlung der Schicht A miteinander verbunden.

### Schicht A

Die Schicht A umfasst eine Hitze-aktivierbare Haftklebemasse, die unter Temperatureinwirkung und optionalem Druck haftklebrig wird und nach der Verklebung und Abkühlen durch die Verfestigung eine hohe Klebkraft aufbaut. Je nach Anwendungstemperatur weisen diese Hitze-aktivierbaren Haftklebemassen unterschiedliche statische Glasübergangstemperaturen T_{G,A} oder Schmelzpunkte T_{S,A} auf.

Die Hitze-aktivierbaren Haftklebemassen können unterschiedliche Polymerstrukturen aufweisen. In einer bevorzugten Auslegung werden thermoplastische Hitze-aktivierbare Materialien eingesetzt. Thermoplaste können in diesem Fall Polyester, Copolyester, Polyamide, Copolyamide sein.

In einer weiteren bevorzugten Ausführung werden Hitze-aktivierbare Haftkleber eingesetzt, die aus einem Elastomer und zumindest einem Reaktivharz bestehen. Als Elastomere werden in diesem Fall bevorzugt Kautschuke oder Synthesekautschuke eingesetzt. Als Reaktivharze eigenen sich z. B. Phenolharze, Epoxy-Harze. Melaminharze, Harze mit Isocyanatfunktionen oder Mischungen aus den obengenannten Harzen. In Kombination mit den Reaktivsystemen lassen sich auch eine Vielzahl anderer Harze, Füllmaterialien, Katalysatoren, Alterungsschutzmittel etc. zusetzen. Weiterhin lassen sich auch Reaktivharze mit thermoplastischen Elastomeren, wie sie bereits zuvor genannt wurden, kombinieren.

Für die Verankerung der Hitze-aktivierbaren Polymere kann es von Vorteil sein, wenn das Polymer vor der Beschichtung mit Corona oder Plasma behandelt wird. Für die atmosphärische Plasmabehandlung eignen sich z. B. Geräte der Fa. Plasmatreat.

Weiterhin kann es für den Prozess und für die Verankerung der Schicht A mit der Schicht B von Vorteil sein, wenn eine chemische Verankerung z. B. über einen Primer stattfindet. Zur Verbesserung der Verankerung kann auch eine Polymerfolie, z. B. auf Basis von Polyester, Polyamid, Polymethacrylat, PVC, etc., beitragen.

### Schicht B

Als Schicht B wird bevorzugt eine Polyacrylathaftklebemasse eingesetzt, die ein Polymer umfasst, das in Bezug auf das Polymer
(b1) 79 bis 100 Gew.-% Acrylsäureester und/oder Methacrylsäureester und/oder deren freie Säuren mit der Formel CH₂=C(R₃)(COOR₄), wobei R₃ H und/oder CH₃ darstellt und R₄ H und/oder Alkylketten mit 1 bis 30 C-Atomen darstellt, und
(b2) 0 bis 30 Gew.-% olefinisch ungesättigte Monomere mit funktionellen Gruppen
umfaßt, wobei sich die Gewichtsangaben auf das Polymer beziehen.

Vorzugsweise werden für die Monomere (b1) Acrylmomonere eingesetzt, die Acryl- und Methacrylsäureester mit Alkylgruppen, bestehend aus 4 bis 14 C-Atomen, bevorzugt 4 bis 9 C-Atomen, umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere, wie z. B. 2-Ethylhexylacrylat. Weitere einzusetzende Verbindungsklassen, die ebenfalls in geringen Mengen unter (b1) hinzugesetzt werden können sind Methylmethacrylate, Cyclohexylmethacrylate, Isoboylacrylat und Isabornylmethacrylate.

Stärker bevorzugt werden für die Monomere (b2) Vinylester, Vinylether, Vinylhalogenide, Vinylidenhalogenide, Vinylverbindungen mit aromatischen Cyclen und Heterocyclen in α-Stellung eingesetzt. Auch hier seien einige nicht einschränkende Beispiele genannt: Vinylacetat, Vinylformamid, Vinylpyridin, Ethylvinylether, Vinylchlorid, Vinylidenchlorid und Acrylonitril. Besonders bevorzugt werden für die Monomere (b2) Monomere mit folgenden funktionellen Gruppen eingesetzt: Hydroxy-, Carboxyl-, Epoxy-, Säureamid-, Isocyanato- oder Aminogruppen.

In einer vorteilhaften Variante werden für (b2) Acrylmonomere entsprechend der folgenden allgemeinen Formel eingesetzt, 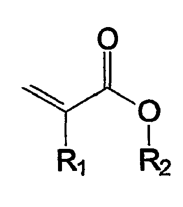 wobei R₁ H oder CH₃ darstellt und der Rest -OR₂ eine funktionelle Gruppe darstellt oder beinhaltet, welche eine nachfolgende UV-Vernetzung der Haftklebemasse unterstützt und welche z. B. besonders bevorzugt eine H-Donor Wirkung besitzt.

Besonders bevorzugte Beispiele für die Komponente b2) sind Hydroxyethylacrylat, Hydrooypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethaaylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Variante werden für die Komponente (b2) aromatische Vinylverbindungen eingesetzt, wobei bevorzugt die aromatischen Kerne aus C₄ bis C₁₈ bestehen und diese auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere wiederum dermaßen gewählt, daß die resultierenden Polymere als industriell verwendbare Haftklebemassen eingesetzt werden können, insbesondere derart, daß die resultierenden Polymere haftklebende Eigenschaften entsprechend dem "Handbook of Pressure Sensitive Adhesive Technology" von Donatas Satas (van Nostrand, New York 1989) besitzen. Auch hier kann die Steuerung der gewünschten Glasübergangstemperatur durch die Anwendung der *Fox*-Gleichung (G1) bei der Zusammenstellung der Monomermischung, welche der Polymerisation zugrunde liegt, erzielt werden. Für die Haftklebemasse der Schicht B liegt die statische Glasübergangstemperatur des resultierenden Polymers vorteilhaft unterhalb 15 °C.

### Herstellung von Schicht B

Zur Herstellung der Polyacrytathaftklebemassen für die Schicht B werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben-Weyl, Methoden der Organischen Chemie, Vol. E 19a, S. 60-147, beschrieben. Diese Methoden werden in bevorzugter Weise in Analogie angewendet.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäutebutyronitril, Cyclohexylsulfonylacetylperoxid, Diisopropylpercarbonat, t-Butylperoktoat, Benzpinacol. Besonders bevorzugt wird als radikalischer Initiator 1,1'-Azo-bis-(cyclohexancarbonsäurenitril) (Vazo 88™ der Fa. DuPont) verwendet.

Die mittleren Molekulargewichte Mₙ der bei der radikalischen Polymerisation entstehenden Haftklebemassen werden sehr bevorzugt derart gewählt, daß sie in einem Bereich von 20.000 bis 2.000.000 g/mol liegen, speziell für die weitere Verwendung als Schmelzhaftkleber werden Haftklebemassen mit mittleren Molekulargewichten Mₙ von 100.000 bis 500.000 g/mol hergestellt. Die Bestimmung des mittleren Molekulargewichtes erfolgt über Größenausschlußchromatographie (SEC) oder Matrix-unterstützte Laser-Desorption/lonisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z.B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether) und Ether (z. B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethytenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Zur Radikalstabilisierung werden in günstiger Vorgehensweise Nitroxide des Typs (NIT 1) oder (NIT 2) eingesetzt: 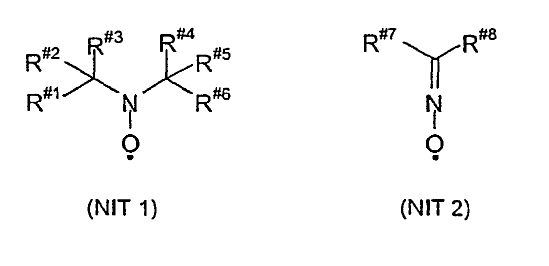 wobei R^{#1}, R^{#2}, R^{#3}, R^{#4}, R^{#5}, R^{#6}, R^{#7}, R^{#8} unabhängig voneinander folgende Verbindungen oder Atome bedeuten:
i) Halogenide, wie z. B. Chlor, Brom oder lod,
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester -COOR^{#9}, Alkoxide -OR^{#10} und/oder Phosphonate -PO(OR^{#11})₂, wobei R^{#9}, R^{#10} und/oder R^{#11} für Reste aus der Gruppe ii) stehen.

Verbindungen der Struktur (NIT 1) oder (NIT 2) können auch an Polymerketten jeglicher Art gebunden sein (vorrangig in dem Sinne, daß zumindest einer der oben genannten Reste eine derartige Polymerkette darstellt) und somit zum Aufbau der Blockcopolymere als Makroradikale oder Makroregler genutzt werden.

Stärker bevorzugt werden für die Polymerisation von Verbindungen kontrollierte Regler des Typs:
- 2,2,5,5-Tetramethyl-1-pyrrolidinyloxyl (PROXYL), 3-Carbamoyl-PROXYL, 2,2-dimethyl-4,5-cydohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methylpropylnitroxid
- N-tert.-Butyl-1-(2-naphtyl)-2-methylpropylnitroxid
- N-tert.-Butyl-1-diethylphosphono-2,2-dimethylpropylnitroxid
- N-tert.-Butyl-1-dibenzylphosphono-2,2-dimethylpropylnitroxid
- N-(1-Phenyl-2-methyl propyl)-1-diethylphosphono-1-methylethylnitroxid
- Di-t-Butylnitroxid
- Diphenylnitroxid
- t-Butyl-t-amylnitroxid

Eine Reihe weiterer Polymerisationsmethoden, nach denen die Kaschierklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf lmidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese von Blockcopolymeren die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (der EP 0 824 111 A1; der EP 826 698 A1; der EP 824 110 A1; der EP 841 346 A1; der EP 850 957 A1) eingesetzt werden. Die unterschiedlichen Möglichkeiten der ATRP sind ferner in den Schriften der US 5,945,491 A, der US 5,854,364 A und der US 5,789,487 A beschrieben.

Weiterhin kann das erfindungsgemäß verwendete Polymer vorteilhaft über eine anionische Polymerisation hergestellt werden. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird im allgemeinen durch die Struktur P_{L}(A)-Me repräsentiert, wobei Me ein Metall der Gruppe I des Periodensystems, wie z. B. Lithium, Natrium oder Kalium, und P_{L}(A) ein wachsender Polymerblock aus den Monomeren A ist. Die Molmasse des herzustellenden Polymers wird durch das Verhältnis von Initiatorkonzentration zu Monomerkonzentration vorgegeben.

Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Variante sind die Liganden und Coinitiatoren so gewählt, daß Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung eignen sich besonders vorteilhaft Trithiocarbonate der allgemeinen Struktur R'"-S-C(S)-S-R'" (Macromolecules 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei ϕ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättigter aliphatischer Rest sein kann. Der Phenylring ϕ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne daß diese Aufzählung Anspruch auf Vollständigkeit erhebt. 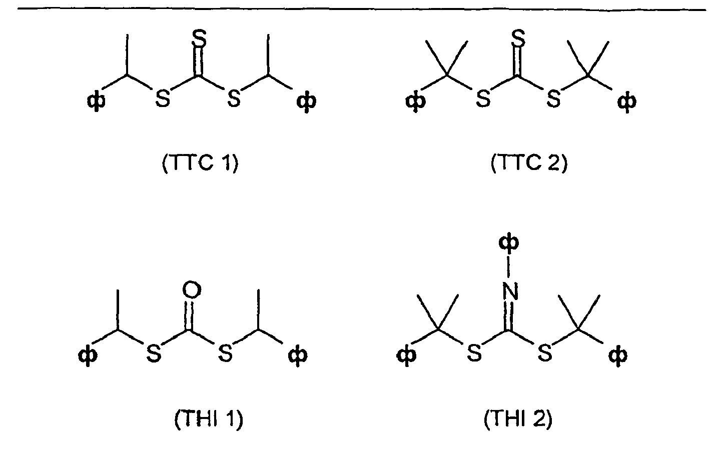 Außerdem können Thioester der allgemeinen Struktur

R^{$1}-C(S)-S-R^{$2} (THE)

zum Einsatz kommen, insbesondere, um asymmetrische Systeme herzustellen. Dabei können R^{$1} und R^{$2} unabhängig voneinander gewählt werden, wobei R^{$1} einen Rest aus einer der folgenden Gruppen i) bis iv) und R^{$2} ein Rest aus einer der folgenden Gruppen i) bis iii) darstellen kann:
i) C₁- bis C₁₈-Alkyl, C₂- bis C₁₈-Alkenyl, C₂- bis C₁₈-Alkinyl, jeweils linear oder verzweigt; Aryl-, Phenyl-, Benzyl-, aliphatische und aromatische Heterocyclen;
ii) -NH₂, -NH-R^{$3}, -NR^{$3}R^{$4}, -NH-C(O)-R^{$3}, -NR^{$3}-C(O)-R^{$4}, -NH-C(S)-R^{$3}, -NR^{$3}-C(S)-R^{$4}, 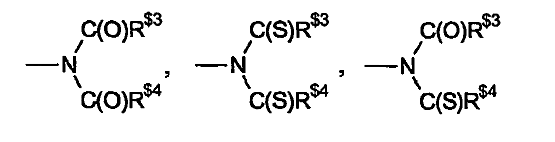 wobei R^{$3} und R^{$4} unabhängig voneinander gewählte Reste aus der Gruppe i) sind;
iii) -S-R^{$5}, -S-C(S)-R^{$5}, wobei R^{$5} ein Rest aus einer der Gruppen i) oder ii) sein kann;
iv) -O-R^{$6}, -O-C(O)-R^{$6}, wobei R^{$6} ein Rest aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff, beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88^{®}, DuPont^{®}) oder 2,2-Azo-bis-(2-methylbutannitril) (Vazo 67^{®}, DuPont^{®}) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden.

Zur vorteilhaften Weiterentwicklung können den Haftklebemassen der Schicht B Harze beigemischt werden. Als zuzusetzende klebrigmachende Harze sind ausnahmslos alle vorbekannten und in der Literatur beschriebenen Klebharz einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Bevorzugt wird die innere Festigkeit (Kohäsion) der Haftklebemasse durch eine Vernetzung gesteigert. Hierzu können den acrylathaltigen Haftklebemassen optional verträgliche Vemetzersubstanzen zugesetzt werden. Als Vernetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.

Verfahren zur Herstellung der erfindungsgemäßen Haftklebemasse Die Haftklebemassen der Schicht B können aus Lösung auf die Hitze-aktivierbare Schicht A oder aus der Schmelze aufgetragen werden. Für die Beschichtung aus Lösung werden bevorzugt Lösemittel eingesetzt, die die Schicht A nicht auflösen. Für den Auftrag aus der Schmelze wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

In einem weiteren sehr bevorzugten Verfahren werden die Schichten A und B im Coextrusionsverfahren gleichzeitig mit einer Coextrusionsdüse zusammengeführt.

Nach der Beschichtung werden die acrylathaltigen Haftklebemassen bevorzugt auf einem Träger vernetzt.

Zur optionalen Vernetzung mit UV-Licht werden den acrylathaltigen Haftklebemassen UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651^{®} von Fa. Ciba Geigy^{®}), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenonreste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Apptications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die acrylathaltigen Haftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Weiterhin betrifft die Erfindung auch der Verwendung der erfindungsgemäßen Haftklebemassen für Haftklebebänder.

### Beispiele

### Hitze-aktivierbare Haftklebemasse (Schicht A)

Zur Herstellung der Hitze-aktivierbaren Haftklebemasse wurde das Copolyamid Platamid® 1276 der Fa. Atofina verwendet. Das Copolymer wurde mit 50 g/m² Masseauftrag aus der Schmelze durch eine Beschichtungsdüse auf einem Trennpapier mit 1,6 g/m² Silikonauftrag beschichtet.

### Herstellung der Polyacrylate (Schicht B)

### Polyacrylat 1:

Ein für radikalische Polymerisationen konventioneller 2-L-Glasreaktor wurde mit 40 g Acrylsäure, 360 g 2-Ethylhexylacrylat und 133 g Aceton/lsopropanol (96 : 4) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/lsbpropanol (96 : 4) Gemisch verdünnt. Zur Reduktion der Restinitiatoren wurden nach 8 und nach 10 h jeweils 0,6 g Bis-(4-tert.-butylcyclohexanyl)-peroxy-dicrbonat (Perkadox 16™. Fa. Akzo Nobel) hinzugegeben. Die Reaktion wurde nach 24 h Reaktionszeit abgebrochen und auf Raumtemperatur abgekühlt.

Anschließend wurde das Polyacrylat mit 0.4 Gew.-% Aluminium-(IIII)-acetylacetonat (3%ige Lösung in Isopropanol) abgemischt, auf einen Feststoffgehalt von 30 % mit Isopropanol verdünnt und dann aus Lösung auf die Hitze-aktivierbare Schicht A beschichtet. Nach Trocknung für 20 Minuten bei 90 °C betrug der Masseauftrag 50 g/m².

### Polyacrylat 2:

Ein für radikalische Polymerisationen konventioneller 2-L-Glasreaktor wurde mit 28 g Acrylsäure, 80 g Methylacrylat, 292 g 2-Ethylhexylacrylat und 200 g Aceton/lsopropanol (95 : 5) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/lsopropanol (95 : 5) Gemisch verdünnt. Zur Reduktion der Restinitiatoren wurden nach 8 und nach 10 h jeweils 0,6 g Bis-(4-tert.-butylcyclohexanyl)-peroxy-dicarbonat (Perkadox 16™, Fa Akzo Nobel) hinzugegeben. Die Reaktion wurde nach 24 h Reaktionszeit abgebrochen und auf Raumtemperatur abgekühlt. Anschließend wurde das Polyacrylat in einem Vakuumtrockenschrank bei 1 Torr und 95 °C vom Lösemittel befreit und aus der Schmelze bei einer Temperatur von 160 °C in der Schmelzfahne auf die Hitze-aktivierbare Schicht A beschichtet. Zur Vernetzung wurde Elektronen bestrahlt mit einem Gerät der Fa. Electron Crosslinking AB, Halmstad, Schweden. Der Haftklebemassenverbund wurde dabei Ober eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 m/min. Es wurde mit 60 kGray und 200 kV Beschleunigungsspannung bestrahlt.

Im Folgenden werden zwei Beispiele von erfindungsgemäßen, zweischichtigen Haftklebemassen beschrieben. Die Aufbereitung der hergestellten Haftklebemassen erfolgte dabei stets auf dem zuvor beschriebenen Weg.

### Beispiel 1

Schicht A: Copolyamid Platamid® 1276
Schicht B: Polyacrylat 1

### Beispiel 2

Schicht A: Copolyamid Platamid® 1276
Schicht B: Polyacrylat 2

Die aufgeführten Beispiele lassen sich zur Verklebung von Fügeteilen oder jeglichen Substraten bzw. Materialien einsetzen. Zur Vorfixierung besitzen die Beispiele 1 bis 2 haftklebrige Eigenschaften. Anschließend kann durch Erwärmung mit anschließender Abkühlung die Verbundfestigkeit deutlich gesteigert werden.

### Liste der verwendeten Bezugszeichen

1 Schicht aus Hitze-aktivierbarer Haftklebemasse (Schicht A)
2 Schicht aus Polyacrylathaftklebemasse (Schicht (B)

## Patentansprüche

1. Haftklebemasse, umfassend eine erste Schicht und eine zweite Schicht, wobei die erste Schicht eine Hitze-aktivierbare Haftklebemasse ist, die eine statische Glasübergangstemperatur T_{G,A} oder einen Schmelzpunkt T_{S,A} von mindestens +30 °C aufweist; und
die zweite Schicht eine Polyacrylathaftklebemasse ist, die eine statische Glasübergangstemperatur von höchstens +15 °C aufweist,
**dadurch gekennzeichnet**, die Hitze-aktivierbare Haftklebemasse der ersten Schicht aus einer Gruppe ausgewählt ist, die
- Polyester,
- Copolyester,
- Polyamide,
- Copolyamide,
- einen Kautschuk oder einen Synthesekautschuk und zumindest ein Reaktivharz umfasst.

2. Verfahren zur Herstellung einer Haftklebemasse nach Anspruch 1, wobei die Hitze-aktivierbare Haftklebemasse der ersten Schicht aus Lösung auf die Polyacrylathaftklebemasse der zweiten Schicht aufgetragen wird.

3. Verfahren zur Herstellung einer Haftklebemasse nach Anspruch 1, wobei die Hitze-aktivierbare Haftklebemasse der ersten Schicht aus der Schmelze auf die Polyacrylathaftklebemasse der zweiten Schicht aufgetragen wird.

4. Verfahren zur Herstellung einer Haftklebemasse nach Anspruch 1, wobei die Hitze-aktivierbare Haftklebemasse der ersten Schicht und die Polyacrylathaftklebemasse der zweiten Schicht während eines Coextrusionsverfahrens zusammengeführt werde.

5. Verfahren nach einem der Ansprüche 2 bis 4, **dadurch gekennzeichnet, dass** es ferner die Vernetzung der Polyacrylathaftklebemasse der zweiten Schicht oder der Polyacrylathaftklebemassen der ersten und der zweiten Schicht umfasst.

6. Verwendung einer Haftklebemasse nach Anspruch 1 für ein Haftklebeband,

## Claims

1. Pressure-sensitive adhesive comprising a first layer and a second layer,
the first layer being a heat-activatable pressure-sensitive adhesive which has a static glass transition temperature T_{g,a} or a melting point T_{m,a} of at least +30°C; and
the second layer being a polyacrylate pressure-sensitive adhesive which has a static glass transition temperature of not more than +15°C,
**characterized in that** the heat-activatable pressure-sensitive adhesive of the first layer is selected from a group which encompasses
- polyesters,
- copolyesters,
- polyamides,
- copolyamides,
- a rubber or a synthetic rubber and at least one reactive resin.

2. Process for preparing a pressure-sensitive adhesive according to Claim 1, the heat-activatable pressure-sensitive adhesive of the first layer being applied from solution to the polyacrylate pressure-sensitive adhesive of the second layer.

3. Process for preparing a pressure-sensitive adhesive according to Claim 1, the heat-activatable pressure-sensitive adhesive of the first layer being applied from the melt to the polyacrylate pressure-sensitive adhesive of the second layer.

4. Process for preparing a pressure-sensitive adhesive according to Claim 1, the heat-activatable pressure-sensitive adhesive of the first layer and the polyacrylate pressure-sensitive adhesive of the second layer being brought together during a coextrusion process.

5. Process according to any one of Claims 2 to 4, **characterized in that** it further comprises the crosslinking of the polyacrylate pressure-sensitive adhesive of the second layer or of the polyacrylate pressure-sensitive adhesives of the first and second layers.

6. Use of a pressure-sensitive adhesive according to Claim 1 for a pressure-sensitive adhesive tape.

## Revendications

1. Matière autoadhésive, comprenant une première couche et une deuxième couche, la première couche étant une matière autoadhésive activable par la chaleur, qui présente une température de transition vitreuse statique T_{V,A} ou un point de fusion T_{F,A} d'au moins +30°C ; et
la deuxième, couche étant une matière autoadhésive polyacrylate qui présente une température de transition vitreuse statique d'au maximum +15°C,
**caractérisée en ce que** la matière autoadhésive activable par la chaleur de la première couche est choisie dans un groupe qui comprend
- des polyesters,
- des copolyesters,
- des polyamides,
- des copolyamides,
- un caoutchouc ou un caoutchouc synthétique et au moins une résine réactive.

2. Procédé pour la préparation d'une matière autoadhésive selon la revendication 1, dans lequel la matière autoadhésive activable par la chaleur de la première couche est appliquée à partir d'une solution sur la matière autoadhésive polyacrylate de la deuxième couche.

3. Procédé pour la préparation d'une matière autoadhésive selon la revendication 1, dans lequel la matière autoadhésive activable par la chaleur de la première couche est appliquée à partir de la masse fondue sur la matière autoadhésive polyacrylate de la deuxième couche.

4. Procédé pour la préparation d'une matière autoadhésive selon la revendication 1, dans lequel la matière autoadhésive activable par la chaleur de la première couche et la matière autoadhésive polyacrylate de la deuxième couche sont réunies au cours d'un processus de coextrusion.

5. Procédé selon l'une quelconque des revendications 2 à 4, **caractérisé en ce qu'**il comprend en outre la réticulation de la matière autoadhésive polyacrylate de la deuxième couche ou de matières autoadhésives polyacrylate de la première couche et de la deuxième couche.

6. Utilisation d'une matière autoadhésive selon la revendication 1, pour un ruban autoadhésif.
